# EUROPÄISCHE PATENTANMELDUNG

(11) **EP 1 051 047 A2**
(43) Veröffentlichungstag der Anmeldung: **08.11.2000**
(21) Anmeldenummer: 00440118.8
(22) Anmeldetag: 28.04.2000
(51) Int. Cl.: H04Q 3/00

(54) **Netzelement mit verschiedenartigen Steuerschnittstellen**

(30) Priorität: 05.05.1999 DE 19920530
(71) Anmelder: ALCATEL, 75008 Paris (FR)
(72) Erfinder: Daase, Detlef Dr., 12205 Berlin (DE); Müller, Irina, 12555 Berlin (DE)
(74) Vertreter: Zinsinger, Norbert

(57) **Zusammenfassung**

Die Erfindung betrifft ein Netzelement (NE1, NE2) eines Kommunikationsnetzes (KOM) mit zwei oder mehr verschiedenartigen Steuerschnittstellen (INT1 bis INT3) und ein Verfahren zur Bereitstellung der zwei oder mehr verschiedenartigen Steuerschnittstellen zu dem Netzelement. Das Netzelement (NE1, NE2) verfügt über eine Netzelementsteuerung zur Steuerung der Funktionen des Netzelements. Die verschiedenartigen Steuerschnittstellen (INT1 bis INT3) sind über jeweilige schnittstellenspezifische Schnittstellen-Teilfunktionen zur Bearbeitung von schnittstellenspezifischen Funktionen und über eine von allen verschiedenartigen Steuerschnittstellen (INT1 bis INT3) gemeinsam genutzte Schnittstellen-Zentralfunktion steuerungstechnisch mit der Netzelementsteuerung gekoppelt. Die Schnittstellen-Zentralfunktion hat Zugriff auf eine Gruppe von Zustandsdaten und Steuerfunktionen der Netzelementsteuerung und stellt über eine für alle Schnittstellen-Teilfunktionen einheitliche Schnittstelle den Zugriff auf diese Zustandsdaten und Steuerfunktionen in einer Darstellung basierend auf einer ersten allgemeinen Semantik bereit. Jede der Schnittstellen-Teilfunktionen weist eine spezifische Konvertierfunktion auf, die die Darstellung basierend auf der ersten allgemeinen Semantik auf eine Darstellung basierend auf einer jeweiligen zweiten, schnittstellenspezifischen Semantik abbildet und dadurch die jeweilige schnittstellenspezifische Schnittstellen-Teilfunktion mit der Schnittstellen-Zentralfunktion auf der Semantikebene koppelt.

## Beschreibung

Die Erfindung betrifft ein Netzelement eines Kommunikationsnetzes mit zwei oder mehr verschiedenartigen Steuerschnittstellen nach dem Oberbegriff von Anspruch 1 und ein Verfahren zur Bereitstellung von zwei oder mehr verschiedenartigen Steuerschnittstellen zu einem Netzelement nach dem Oberbegriff von Anspruch 8.

Die Erfindung geht von einem Netzelement aus, das eine Vermittlungsstelle eines Fernsprechnetzes ist und einerseits über eine Schnittstelle zu einer Dienststeuereinheit eines Intelligenten Netzes und andererseits über eine Schnittstelle zu einer Netzwerkmanagement-Zentrale verfügt. Jede dieser Schnittstellen wird von einer Funktionsgruppe bereitgestellt, die vollkommen unabhängig von der jeweiligen anderen Funktionsgruppe gemäß den an sie gestellten Forderungen mit der Steuerung der Vermittlungsstelle verkoppelt ist.

Auf den Seiten 5 bis 19 der ITU-T Empfehlung Q.1214, 03/1993 wird erläutert, wie die Schnittstelle zu einer Dienststeuereinheit eines Intelligenten Netzes mit der Steuerung der Vermittlungsstelle verkoppelt wird:

Die Vermittlungsstelle verfügt über ein Dienstvermittlungsfunktion, die mit einer speziellen Einheit der Verbindungssteuerungsfunktionen der Vermittlungsstelle interagiert. Diese Einheit stellt die grundlegende Ruf- und Verbindungssteuerung für den Aufbau von Verbindungen zur Verfügung und detektiert grundlegende Ruf- und Verbindungssteuerungsereignisse, die für IN Dienste (IN = Intelligent Network) von Bedeutung sein können. Sie interagiert mit einem Dienst-lnteraktionsverwalter der Dienstvermittlungsfunktion, indem sie bei der Verbindungssteuerung auftretende Trigger-Ereignisse an den Dienst-Interaktionsverwalter meldet und andererseits von diesem Nachrichten empfängt, die den weiteren Ablauf der Verbindungssteuerung beeinflussen.

In dem Artikel "Telecommunications Management Network (TMN): Architektur, Schnittstellen und Anwendungen", ntz Bd. 43, Heft 6, 1990, wird beispielsweise die Funktion einer Netzwerkmanagement-Schnittstelle eines Netzelementes erläutert:

Ein Agent-Prozeß der Vermittlungsstelle stellt die Netzwerkmanagement-Schnittstelle zur Netzwerkmanagement-Zentrale bereit. Die für das Netzwerkmanagement zugreifbaren Parameter und Funktionen der Steuerung der Vermittlungsstelle sind als Objekte definiert, auf die mittels der Agent-Funktionalität zugegriffen wird.

Der Erfindung liegt nun die Aufgabe zugrunde, den Aufbau eines Netzelements zu vereinfachen, das über verschiedenartige Steuerungsschnittstellen verfügt.

Diese Aufgabe wird gelöst durch ein Netzelement eines Kommunikationsnetzes mit zwei oder mehr verschiedenartigen Steuerschnittstellen nach der Lehre von Anspruch 1 und ein Verfahren zur Bereitstellung von zwei oder mehr verschiedenartigen Steuerschnittstellen zu einem Netzelement nach der Lehre von Anspruch 8.

Der Erfindung liegt hierbei der Gedanke zugrunde, die verschiedenartigen Steuerschnittstellen mittels einer von allen verschiedenartigen Steuerschnittstellen gemeinsam genutzten Schnittstellen-Zentralfunktion und jeweiligen schnittstellenspezifischen Schnittstellen-Teilfunktionen zur Bearbeitung von schnittstellenspezifischen Funktionen aufzubauen und die jeweilige schnittstellenspezifischen Schnittstellen-Teilfunktion mit der Schnittstellen-Zentralfunktion auf der Semantikebene zu verkoppeln.

Daraus erwächst der Vorteil, daß weitere Steuerschnittstellen für das Netzelement erheblich schneller und mit geringerem Entwicklungsaufwand in das Netzelement integriert werden können. Weitere Vorteile ergeben sich zum einen daraus, daß schnittstellenspezifischen Schnittstellen-Teilfunktionen mit geringen Abänderungen in einer Vielzahl unterschiedlicher Netzelemente verwendet werden können. Es ist lediglich u. U. eine Abänderung der Konvertierfunktion notwendig, die die Semantikumwandlung durchführt. Die Einsatzmöglichkeit kommerzieller Software-Baugruppen wird vergrößert, was den Entwicklungsaufwand erheblich senkt. Zum anderen muß bei der Vornahme von Änderungen in der Steuerung des Netzelements nicht jede Schnittstellenfunktion einzeln an diese Änderungen angepaßt werden, es ist vielmehr ausreichend, wenn die Schnittstellen-Zentralfunktion angepaßt wird.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationsnetzes mit mehreren erfindungsgemäßen Netzelementen
- Fig. 2: zeigt eine funktionelle Darstellung eines Netzelements nach Fig. 1.

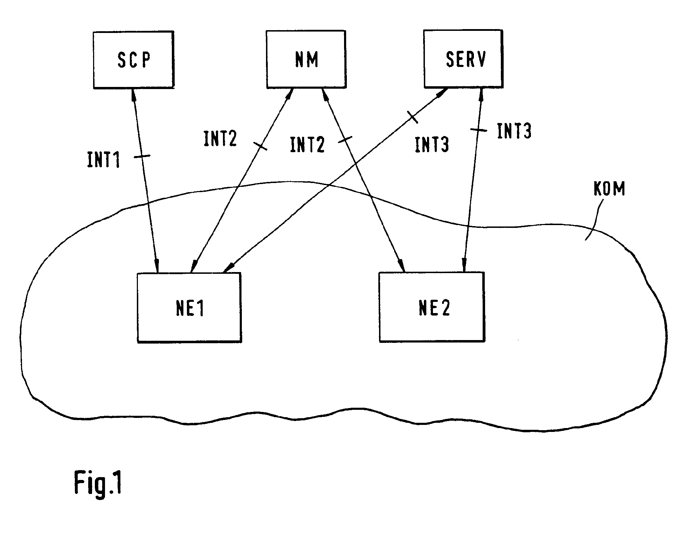

Fig. 1 zeigt ein Kommunikationsnetz KOM und drei Rechnersysteme SCP, NM und SERV.

Das Kommunikationssystem KOM stellt ein Kommunikationssystem zur Sprachkommunikation, beispielsweise ein ISDN Kommunikationssystem (ISDN = Integrated Services Digital Network) dar. Es ist jedoch auch möglich, daß das Kommunikationssystem KOM weiter der Daten und/ oder Bildkommunikation dient. So kann es sich bei dem Kommunikationssystem KOM beispielsweise auch um ein IP Netz (IP = Internet Protocol) handeln, das auf mehreren miteinander gekoppelten ATM und ETHERNET Übertragungsnetzen aufsetzt.

Von den Netzelementes des Kommunikationsnetzes KOM sind in Fig. 1 beispielhaft zwei Netzelemente NE1 und NE2 gezeigt, wobei das Netzelement NE1 mit den Rechnersystemen SCP, NM und SERV und das Netzelement NE2 mit den Rechnersystemen NM und SERV verbunden ist.

Das Netzelement NE1 stellt einen Vermittlungsknoten des Kommunikationsnetze KOM dar, beispielsweise eine ISDN Vermittlungsstelle, und das Netzelement NE2 stellt einen Übertragungsknoten des Kommunikationsnetzes KOM dar, beispielsweise ein SDH Netzelement (SDH = Synchrone Digitale Hierarchie). Es ist hierbei möglich, daß die Netzelemente NE1 und NE2 je nach Art des Kommunikationsnetzes KOM von beliebigen anderen Netzelementen gebildet werden können: Es kann sich bei den Netzelementen NE1 und NE2 beispielsweise auch um Router, Brigdes oder Gateways eines Datennetzes handeln.

Die Rechnersysteme SCP, NM und SERV stellen mit verschiedenen Aufgaben betraute Rechnersysteme dar, die auf die Steuerung von mit ihnen verbundenen Netzelementen zugreifen, in dem sie beispielsweise Zustandsparameter dieser Netzelemente abfragen oder mittels Steuerbefehle auf die Funktionsweise der Netzelemente Einfluß nehmen.

Bei dem Rechnersystem SCP handelt es sich um eine Dienststeuereinheit nach der IN Architektur (IN = Intelligent Network). Das Rechnersystem SCP ist über eine Schnittstelle INT1 mit dem Netzelement NE1 verbunden und steuert die Ausführung von Telekommunikationsdienste für Rufe, die über das Netzelement NE1 geführt werden. Das Rechnersystem SCP ist mit dem Netzelement SCP beispielsweise über das Signalisierungsnetz verbunden. Als Transportprotokolle über die Schnittstelle INT1 werden die Transportprotokolle des Nr. 7 Signalisierungssystems verwendet. Als Steuerprotokoll über die Schnittstelle INT1 wird das INAP Protokoll (INAP = Intelligent Network Application PART) verwendet.

Bei dem Rechnersystem NM handelt es sich um einen OSI Netzwerkmanagement-System. Es kann sich bei dem Rechnersystem NM natürlich auch um ein Netzwerkmanagement-System für Datennetze handeln, das mit den zu steuernden Netzelementen mittels des SNMP Steuerungs-Protokolls (SNMP = Simple Network Management Protocol) kommuniziert. Das Rechnersystem NM ist über eine Schnittstelle INT2 mit den Netzelementen NE1 und NE2 verbunden und überwacht und verwaltet die mit ihm verbundenen Netzelemente. Das Rechnersystem NM ist mit den Netzelementen NE1 und NE2 beispielsweise über das Signalisierungsnetz verbunden. Als Transportprotokolle über die Schnittstelle INT2 werden dann die Transportprotokolle des Nr. 7 Signalisierungssystems verwendet. Es ist jedoch auch möglich, daß das Rechnersystem NM mit den Netzelementen NE1 und NE2 über ein Datennetz verbunden ist und als Transportprotokolle über die Schnittstelle INT2 LAN Protokolle (LAN =Local Area Network) wie das ETHERNET Protokoll, MAN Protokolle (MAN = Metropolitan Area Network) wie das DQDB Protokoll oder ein ATM Protokoll verwendet wird. Als Steuerprotokoll über die Schnittstelle INT2 wird das CMIP Protokoll (CMIP = Common Management Information Protocol) verwendet.

Bei dem Rechnersystem SERV handelt es sich um ein oder mehrere über ein Kommunikationsnetz miteinander verbundene Rechnerknoten. Diese Rechnerknoten sind über ein Kommunikationsnetz, beispielsweise einem Datennetz, aber möglicherweise auch über das Signalisierungsnetz des Kommunikationssystems KOM mit den Netzelementen NE1 und NE2 verbunden. Die Rechnerknoten des Rechnersystems SERV weisen jeweils eine Hardware-Plattform, bestehend aus Prozessoren, Speichereinrichtungen und peripheren Komponenten, eine Software-Plattform, die beispielsweise ein Betriebssystem und ein Datenbanksystem umfaßt, und ein oder mehrere Anwendungen aufweisen, die Zugriff auf die Steuerung der Netzknoten NE1 und NE2 nehmen. Die Anwendungen stellen beispielsweise Dienste für die Steuerung der Netzelemente NE1 und NE2 oder für Teilnehmer des Kommunikationsnetzes KOM bereit oder stellen Teilnehmern oder Betreibern des Kommunikationsnetzes KOM Überwachungs-, Darstellungs- oder Steuerungsfunktionen zur Verfügung, die die Netzelemente NE1 und NE2 betreffen.

Die Anwendungen werden von auf der Software-Plattform ablaufenden Anwendungs-Programm-Modulen gebildet werden. Die Rechnerknoten sind beispielsweise durch ein X.25, #7, Ethernet oder Token-Ring Kommunikationsnetz miteinander verbunden.

Die Anwendungs-Programm-Module sind als Objekte modelliert. Der Code und die Daten eines Objektes werden durch eine Summe von Attributen und Funktionen repräsentiert, auf die andere Objekte zugreifen können. Diese Objekte kommunizieren über eine ORB Infrastruktur (ORB = Objekt Request Broker Architecture), beispielsweise über die CORBA Objekt Infrastruktur, über die Schnittstelle INT3 mit den Netzelementen NE1 und NE2: Objekt-Anforderungs-Broker (ORB) stellen eine Infrastruktur zur Verfügung, die es den Objekten erlaubt, in einer verteilten Umgebung zu kommunizieren. Für die Objekte ist es damit nicht von Bedeutung, auf welchem der Rechnerknoten des Rechnersystems SERV oder auf welchem der Netzelemente NE1 und NE1 ein Objekt, dessen Dienst sie anfordern wollen, angesiedelt ist und auf welcher speziellen Plattform oder in welchem Implementierungsverfahren das Objekt realisiert ist. Jedes Objekt kennt hierzu zumindest einen Objekt-Anforderungs-Broker ORB und weiß, wie sie diesen lokalen Objekt-Anforderungs-Broker zu kontaktieren hat. Jeder Objekt-Anforderungs-Broker weiß wie er andere Objekt-Anforderungs-Broker kontaktieren kann und wie er mit ihnen zu kommunizieren hat. Hierfür Verwendet er das RPC-Verfahren (RPC = remote procedure call mechanisms). Ein Objekt sendet somit eine Anforderungsnachricht an einen der Objekt-Anforderungs-Broker ORB, die Weiterreichen der Anforderungsnachricht an das Ziel-Objekt wird durch die von den Objekt-Anforderungs-Broker ORB gebildete CORBA-Infrastruktur erledigt.

Eine andere mögliche ORB Infrastruktur ist beispielsweise die DCOM Objekt Infrastruktur.

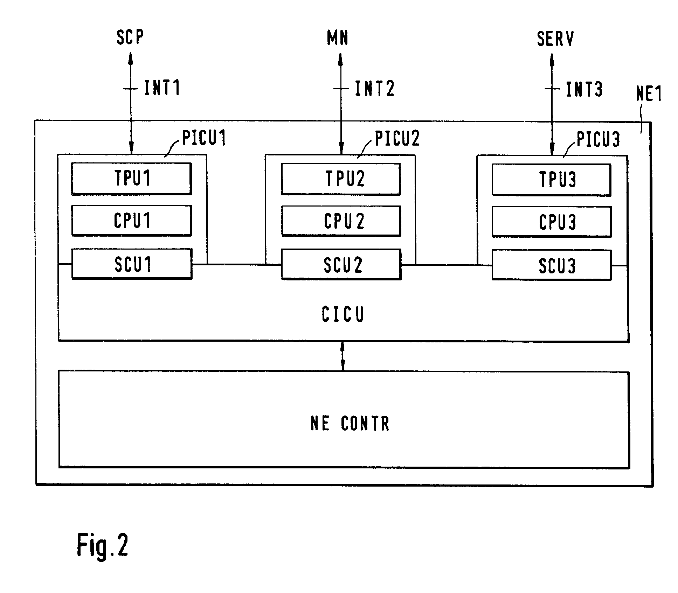

Anhand von Fig. 2 wird nun beispielhaft der Aufbau der Netzelemente des Kommunikationsnetzes KOM anhand des Aufbaus des Netzelements NE1 beschrieben.

Fig. 2 zeigt das Netzelement NE1 mit einer Netzelementsteuerung NECONTR, drei Schnittstellen Teilfunktionen PICU1 bis PICU3 und einer Schnittstellen-Zentralfunktion CICU. Die Schnittstellen-Teilfunktionenen PICU1 bis PICU3 stellen die Steuerschnittstellen INT1, INT2, bzw. INT3 zu den Rechnersystemen SCP, MN und SERV bereit.

Es ist auch möglich, daß das Netzelement NE über eine andere Zahl von Schnittstellen-Teilfunktionenen und damit Steuerschnittstellen zu Rechnersystemen verfügt oder daß Schnittstellen-Teilfunktionenen Steuerschnittstellen zu andersartigen Rechnersystemen bereitstellt. Beispiele hierfür sind Steuerschnittstellen zu GSM, UMTS oder Billing Servern (GSM = Global System for Mobility, UMTS = Universal Mobile Telecommunication Service).

Die Netzelementsteuerung NECONTR dient der Steuerung der Funktionen des Netzelements. Sie wird von einem oder mehreren über ein Kommunikationsmedium verbundenen Rechnerknoten gebildet. Die Rechnerknoten sind beispielsweise durch X.25, #7, Ethernet oder Token-Ring Kommunikationsnetz oder über einen Software Bus miteinander verbunden. Der Rechnerknoten oder die Rechnerknoten bilden eine Hardware-Plattform, bestehend aus Prozessoren, Speichereinrichtungen und peripheren Komponenten, auf der eine Software-Plattform aufsetzt, die beispielsweise ein Betriebssystem und ein Datenbanksystem umfaßt. Auf dieser Systemplattform setzen dann eine Vielzahl von Anwendungsfunktionen auf, die die Funktionen des Netzelements wie beispielsweise Verbindungsaufbau, Rufsteuerung oder Protokollkonvertierung durchführen und steueren.

Die Schnittstellen-Teilfunktionen PICU1 bis PICU3 und die Schnittstellen-Zentralfunktion CICU setzen auf derselben Systemplattform wie die Netzelementsteuerung NECONTR auf. Es ist jedoch auch möglich, daß diese Funktionen von Applikations-Programmen gebildet werden, die auf einem separaten Rechnerknoten mit einer separaten Systemplattform aufsetzen, der mit dem oder den Rechnerknoten der Netzelementsteuerung NECONTR über ein Kommunikationsmedium verbunden ist.

Die Schnittstellen-Teilfunktionen PICU1 bis PICU3 stellen den Rechnersystemen SCP, MN bzw. SERV die verschiedenartigen Steuerschnittstellen INT1 bis INT3 zur Verfügung und bearbeiten die für die Bereitstellung der verschiedenartigen Steuerschnittstellen INT1 bis INT3 notwendigen schnittstellenspezifischen Funktionen. Die Schnittstellen-Zentralfunktion CICU wird von den Schnittstellen-Teilfunktionen PICU1 bis PICU3 gemeinsam genutzt. Die verschiedenartigen Steuerschnittstellen INT1 bis INT3 sind hierbei über die jeweilige schnittstellenspezifischen Schnittstellen-Teilfunktion PICU1 bis PICU3, die die Bearbeitung der schnittstellenspezifischen Funktionen durchführen und über die von allen verschiedenartigen Steuerschnittstellen INT1 bis INT3 gemeinsam genutzte Schnittstellen-Zentralfunktion CICU steuerungstechnisch mit der Netzelementsteuerung NECONTR gekoppelt.

Die Schnittstellen-Zentralfunktion CICU ist einerseits mit der Netzelementsteuerung NECONTR so verkoppelt, daß ihr der Zugriff auf eine Gruppe von Zustandsdaten und Steuerfunktionen der Netzelementsteuerung NECONTR möglich ist. Zum anderen stellt sie über eine für alle Schnittstellen-Teilfunktionen einheitliche Schnittstelle den Zugriff auf diese Zustandsdaten und Steuerfunktionen in einer Darstellung basierend auf einer ersten allgemeinen Semantik bereit.

Die Verkopplung der Schnittstellen-Zentralfunktion CICU mit der Netzelementsteuerung kann zum einen durch Auslesen und Verändern von in der Datenbank der Netzelementsteuerung NECONTR abgespeicherten Zustandsdaten der Netzelementsteuerung NECONTR erfolgen. Hierdurch kann der Zustand des Netzelements NE1 bestimmt werden und Einfluß auf Steuerungsabläufe des Netzelements NE1 genommen werden, d. h. Zugriff auf Steuerungsfunktionen der Netzelementsteuerung genommen werden. Eine weitere Möglichkeiten der Verkopplung bestehen in dem Senden und dem Empfang von Nachrichten an Objekte der Netzelementsteuerung NECONTR. Noch eine weitere Möglichkeiten der Verkopplung bestehen in dem Senden von Nachrichten an in der Netzelementsteuerung NECONTR ablaufende endliche (Zustands-)Automaten (Finite State Machines), die den Ablauf dieser Automaten beeinflussen und dem Abhorchen von Ereignisnachrichten, die von solchen Automaten gesendet werden.

Die Schnittstellen-Zentralfunktion CICU enthält hierzu Funktionseinheiten, die die Transportprotokolle und die Steuerprotokolle für diese Kommunikation mit der Netzelementsteuerung bearbeiten sowie eine Semantikaufarbeitung vornehmen.

Die Bearbeitung der Transportprotokolle dient hierbei dem Transport der oben beschriebenen Daten zwischen Netzelementsteuerung NECONTR und der Schnittstellen-Zentralfunktion CICU. In der Netzelementsteuerung NECONTR bereitstehende Daten werden hierdurch von der entsprechenden Funktionseinheit in der Schnittstellen-Zentralfunktion CICU bereitgestellt und umgekehrt. Je nach Art der Kopplung der Schnittstellen-Zentralfunktion CICU und der Netzelementsteuerung NECONTR kann es auch möglich sein, daß hierfür keine Funktionen in der Schnittstellen-Zentralfunktion CICU bereitgestellt werden müssen.

Die Bearbeitung der Steuerungsprotokolle und die Semantikbearbeitung dient dem Abbilden einer ersten, in der Netzelementsteuerung NECONTR vorliegenden Datenstruktur auf eine zweite, für die Schnittstellen-Zentralfunktion CICU spezifische Datenstruktur und umgekehrt. Die entsprechende Steuereinheit stellt somit in der Schnittstellen-Zentralfunktion CICU Zustandsdaten und Steuerfunktionen der Netzelementsteuerung NECONTR in einer für die Schnittstellen-Zentralfunktion CICU spezifischen Datenstruktur dar. Die Semantikaufarbeitung legt hierbei die Semantik und damit die Bedeutung der einzelnen Parameter der für die Schnittstellen-Zentralfunktion CICU spezifischen Datenstruktur fest und stellt sicher, daß die Daten in der für die Schnittstellen-Zentralfunktion CICU spezifischen Datenstruktur gemäß der ersten für die Schnittstellen-Teilfunktionen PICU1 bis PICU3 allgemeinen Semantik den Schnittstellen-Teilfunktionen PICU1 bis PICU3 bereitgestellt werden.

Weiter koordiniert die Schnittstellen-Zentralfunktion CICU den Zugriff der Schnittstellen-Teilfunktionen PICU1 bis PICU3 auf die von ihr bereitgestellten Daten und stellt somit zusätzliche eine Broker-Funktion für den gemeinsamen Zugriff der Schnittstellen-Teilfunktionen PICU1 bis PICU3 auf die Netzelementsteuerung NECONTR bereit.

Die Schnittstellen-Teilfunktionen PICU1 bis PICU3 weisen Funktionseinheiten TPU1 bis TPU3, CPU1 bis CPU3 und SCU1 bis SCU3 auf.

Die Funktionseinheiten SCU1, SCU2 und SCU3 stellen für die jeweilige Schnittstellen-Teilfunktionen PICU1 bis PICU3 Konvertierfunktion bereit, die die von der Schnittstellen-Zentralfunktion CICU bereitgestellten Darstellung basierend auf der ersten allgemeinen Semantik auf eine Darstellung basierend auf eine jeweilige zweiten, schnittstellenspezifische Semantik abbildet und dadurch die jeweilige schnittstellenspezifischen Schnittstellen-Teilfunktion PICU1, PICU2, PICU3 mit der Schnittstellen-Zentralfunktion CICU auf der Semantikebene koppelt.

Die Funktionseinheiten SCU1, SCU2 und SCU3 bilden die zweite, für die Schnittstellen-Zentralfunktion CICU spezifische Datenstruktur auf eine jeweilige dritte, für die jeweilige Schnittstellen-Teilfunktionen spezifische Datenstruktur ab und führen hierbei zusätzlich eine Semantikkonvertierung durch, d. h. sie beachten bei dieser Abbildung die Semantik, also die Bedeutung der einzelnen Parameter der Datenstrukturen für sich und in Zusammenhang mit den anderen Parametern der Datenstruktur und der Struktur der Datenstruktur als solche. Es ist bei der Semantikkonvertierung durchaus möglich, daß ein Parameter der einen Struktur in eine Vielzahl von Parametern in der anderen Struktur oder umgekehrt gewandelt wird oder daß aus dem Vorliegen einer bestimmten Struktur in der einen Abbildung ein oder mehrere Parameter in der anderen Abbildung resultieren oder umgekehrt. Wesentlich ist hierbei, daß bei der Semantikkonvertierung der Bedeutungsgehalt der beiden Abbildungen erhalten bleibt, obwohl die einzelnen Parameter und Strukturen gemäß der jeweiligen Semantik ganz unterschiedliche Bedeutungen haben.

Die Funktionseinheiten CPU1, CPU2 und CPU3 bearbeiten die Steuerungsprotokolle der jeweiligen Schnittstellen INT1, INT2 bzw. INT3. Bei diesen Steuerprotokollen handelt es sich um die Protokolle auf der Anwendungsebene, die auf die jeweiligen spezifischen für die jeweilige Steurungsschnittstelle notwendigen vordefinierten Funktionen auf der Anwendungsebene zurückgreifen. Diese Funktionen greifen dann auf die für die jeweilige Schnittstellen-Teilfunktion spezifische Datenstruktur zu. Die Funktionseinheiten CPU1, CPU2 und CPU3 bearbeiten beispielsweise das INAP Protokoll oder das CMIP Protokoll oder stellen Proxy Objekte mit einem entsprechenden Interface bereit.

Die Funktionseinheiten TPU1, TPU2 und TPU3 bearbeiten die Transportprotokolle der jeweilige Steuerschnittstelle INT1, INT2 bzw. INT3, d. h. die für die Übertragung der Daten zwischen den Rechnersystemen SCP, MN und SERV und dem Netzelement NE1 verwendeten Kommunikationsprotokolle. Bei diesen Protokollen handelt es sich beispielsweise um Transportprotokolle des Nr. 7 Signalisierungssystems, X.25 Protokolle, LAN Protokolle (LAN = Local Area Network) wie das ETHERNET Protokoll, MAN Protokolle (MAN = Metropolitan Area Network) wie das DQDB Protokoll, ATM Protokolle oder den TCP/IP Protokollstack.

## Patentansprüche

1. Netzelement (NE1, NE2) eines Kommunikationsnetzes (KOM) mit einer Netzelementsteuerung (NECONTR) zur Steuerung der Funktionen des Netzelements und mit zwei oder mehr verschiedenartigen Steuerschnittstellen (INT1 bis INT3),
**dadurch gekennzeichnet**, daß die verschiedenartigen Steuerschnittstellen (INT1 bis INT3) über eine jeweilige schnittstellenspezifische Schnittstellen-Teilfunktion (PICU1 bis PICU3) zur Bearbeitung von schnittstellenspezifischen Funktionen und über eine von allen verschiedenartigen Steuerschnittstellen (INT1 bis INT3) gemeinsam genutzte Schnittstellen-Zentralfunktion (CICU) steuerungstechnisch mit der Netzelementsteuerung (NECONTR) gekoppelt sind, daß die Schnittstellen-Zentralfunktion (CICU) so ausgestaltet ist, daß sie Zugriff auf eine Gruppe von Zustandsdaten und Steuerfunktionen der Netzelementsteuerung (NECONTR) hat und daß sie über eine für alle Schnittstellen-Teilfunktionen (PICU1 bis PICU3) einheitliche Schnittstelle den Zugriff auf diese Zustandsdaten und Steuerfunktionen in einer Darstellung basierend auf einer ersten allgemeinen Semantik bereitstellt, und daß jede der Schnittstellen-Teilfunktionen (PICU1 bis PICU3) eine spezifische Konvertierfunktion (SCU1 bis SCU3) aufweist, die so ausgestaltet ist, daß sie die Darstellung basierend auf der ersten allgemeinen Semantik auf eine Darstellung basierend auf einer jeweiligen zweiten, schnittstellenspezifischen Semantik abbildet und dadurch die jeweilige schnittstellenspezifische Schnittstellen-Teilfunktion (SCU1 bis SCU3) mit der Schnittstellen-Zentralfunktion (CICU) auf der Semantikebene koppelt.

2. Netzelement nach Anspruch 1, dadurch gekennzeichnet, daß die Schnittstellen-Zentralfunktion (CICU) so ausgestaltet ist, daß sie Broker-Funktionen für den gemeinsamen Zugriff der Schnittstellen-Teilfunktionen (SCU1 bis SCU3) auf die Netzelementsteuerung (NECONTR) übernimmt.

3. Netzelement nach Anspruch 1, dadurch gekennzeichnet, daß jede der Schnittstellen-Teilfunktionen (SCU1 bis SCU3) eine schnittstellenspezifische Steuerprotokollbearbeitungsfunktion (CPU bis CPU3) aufweist.

4. Netzelement nach Anspruch 1, dadurch gekennzeichnet, daß jede der Schnittstellen-Teilfunktionen (SCU1 bis SCU3) eine schnittstellenspezifische Transportprotokollbearbeitungsfunktion (TPU1 bis TPU3) aufweist.

5. Netzelement nach Anspruch 1, dadurch gekennzeichnet, daß eine erste Steuerschnittstelle (INT1) eine Schnittstelle zur Ankopplung von Servern zur Erbringung von Telekommunikationsdiensten ist.

6. Netzelement nach Anspruch 1, dadurch gekennzeichnet, daß eine zweite Steuerschnittstelle (INT2) eine Netzwerkmanagement Schnittstelle ist.

7. Netzelement nach Anspruch 1, dadurch gekennzeichnet, daß eine dritte Steuerschnittstelle (INT3) eine Schnittstelle zu einer Objekt Infrastruktur ist.

8. Verfahren, um zwei oder mehr verschiedenartige Steuerschnittstellen (INT1 bis INT3) zu einem Netzelement (NE1, NE2) eines Kommunikationsnetzes (KOM) bereitzustellen, wobei bei dem Verfahren die Funktionen des Netzelements (NE1, NE2) von einer Netzelementsteuerung (NECONTR) gesteuert werden,
**dadurch gekennzeichnet**, daß die verschiedenartigen Steuerschnittstellen (INT1 bis INT3) über eine jeweilige schnittstellenspezifische Schnittstellen-Teilfunktion (PICU1 bis PICU3) zur Bearbeitung von schnittstellenspezifischen Funktionen und über eine von allen verschiedenartigen Steuerschnittstellen (INT1 bis INT3) gemeinsam genutzte Schnittstellen-Zentralfunktion (CICU) steuerungstechnisch mit der Netzelementsteuerung (NECONTR) gekoppelt werden, daß die Schnittstellen-Zentralfunktion (CICU) Zugriff auf eine Gruppe von Zustandsdaten und Steuerfunktionen der Netzelementsteuerung (NECONTR) hat, daß die Schnittstellen-Zentralfunktion (CICU) über eine für alle Schnittstellen-Teilfunktionen (PICU1 bis PICU3) einheitliche Schnittstelle den Zugriff auf diese Zustandsdaten und Steuerfunktionen in einer Darstellung basierend auf einer ersten allgemeinen Semantik bereitstellt, und daß jede der Schnittstellen-Teilfunktionen (PICU1 bis PICU3) die Darstellung basierend auf der ersten allgemeinen Semantik auf eine Darstellung basierend auf einer jeweiligen zweiten, schnittstellenspezifischen Semantik abbildet und dadurch die jeweilige schnittstellenspezifische Schnittstellen-Teilfunktion (SCU1 bis SCU3) mit der Schnittstellen-Zentralfunktion (CICU) auf der Semantikebene koppelt.
